# EUROPÄISCHE PATENTSCHRIFT

(11) **EP 2 962 575 B1**
(45) Veröffentlichungstag und Bekanntmachung des Hinweises auf die Patenterteilung: **05.09.2018**
(21) Anmeldenummer: 14175328.5
(22) Anmeldetag: 01.07.2014
(51) Int. Cl.: A23G 1/00, A23G 1/46, A23G 1/56, A23G 3/34, A23G 3/46, A23G 1/30, A23G 1/40, A23G 3/42

(54) **Karamellvorstufen mit speziellem Nachdickverhalten**
Caramel precursors with special post-thickening behaviour
Ébuches de caramel avec comportement d'après- epaississement spécial

(43) Veröffentlichungstag der Anmeldung: 06.01.2016
(73) Patentinhaber: DMK Deutsches Milchkontor GmbH, 27404 Zeven (DE)
(72) Erfinder: Diekhaus, Martin, 49451 Holdorf (DE)
(74) Vertreter: Fabry, Bernd

(56) Entgegenhaltungen:
- US-A- 4 871 573
- US-A- 5 591 474
- MINIFIE B W: "The manufacture of crumb milk chocolate and other methods of incorporation of milk in chocolate", MANUFACTURING CONFECTIONER, MANUFACTURING CONFECTIONER PUBLISHING COMPANY, US, Bd. 54, Nr. 4, 1. April 1974 (1974-04-01), Seiten 19-26, XP008122403, ISSN: 0025-2573

## Beschreibung

### GEBIET DER ERFINDUNG

Die Erfindung befindet sich auf dem Gebiet der Lebensmitteltechnologie und betrifft Karamell- und Schokolade enthaltende Karamellvorstufen mit verbesserten Verdickungsverhalten, ein Verfahren zu deren Herstellung sowie die Verwendung solcher Karamellvorstufen.

### STAND DER TECHNIK

Das Karamellisieren gehört zu den nicht-enzymatischen Bräunungsreaktionen.

Zur traditionellen Herstellung von Karamell wird Kristallzucker (Saccharose) unter ständigem Rühren trocken in einer Pfanne auf starkem Feuer erhitzt. Beginnt der Zucker zu schmelzen, dauert es nur wenige Sekunden, bis das Karamell eine dunkle Farbe annimmt. Damit die Masse anschließend nicht erstarrt, wird sie, wenn der gewünschte Bräunungsgrad erreicht ist, mit kochendem Wasser abgelöscht und zu einem Sirup aufgelöst.

Kristallzucker beginnt bei etwa 135 °C zu schmelzen, noch ohne sich zu verfärben. Der entstehende schwache Bruch wird in der Konditorei für glasierte Früchte, Spinnzucker und Dekorationen aus Zucker verwendet. Das eigentliche Karamellisieren, das Farbe und Geschmack verändert, setzt bei Temperaturen um 150 °C ein, für goldbraunen Karamell, den starken Bruch, sind Temperaturen von 180 bis 200 °C notwendig. Erkalteter Karamell ist durchscheinend und von glasartiger, hart-brüchiger Konsistenz. Die verschiedenen Farben des Karamells erreicht man unter anderem durch Temperaturänderung (je heißer, je schwärzer) und durch Zusatzstoffe beim Erhitzen z.B. Sulfit oder Ammoniumcarbonat.

Zucker wie Glukose, Fruktose und Saccharose ändern sich dramatisch in ihrer chemischen Zusammensetzung, wenn sie erhitzt werden. Fakt ist, dass Karamell nur noch zu etwa 10% Zucker enthält, und alle anderen Komponenten sich neu bilden. So wurde kürzlich mittels moderner massenspektrometrischen Methoden nachgewiesen, dass mindestens 4000 verschiedene Reaktionsprodukte dabei entstehen (J. Agric Food Chem., 2012, 60 (12), Seiten 3266-3274). Der Zucker wird entwässert, und die Bildung verschiedener Oligomere von Zucker sowie Wasserabspaltungsprodukte erfolgt, von denen einige für die braune Färbung und den bitteren Geschmack verantwortlich sind. Daher schmeckt Karamell umso herber, je dunkler er gebrannt ist.

Lebensmittelhersteller nutzen heute computergesteuerte Karamell-Fertigungslinien, die eine gleich bleibende Qualität gewährleisten. Ob flüssig, fest oder pastös, ob als Füllung, Überzug, zum Aromatisieren, Färben oder als Hauptbestandteil von Lebensmitteln - Karamell erfreut sich seit Jahrhunderten großer Beliebtheit. Rund 80 % der gefärbten Lebensmittel wird Karamell zugesetzt. Bekannte Beispiele sind Cola, Whiskey, Bier, Sojasauce und Kekse. Ferner wird Karamellcreme ebenso als Überzugsmasse in Schokoriegeln, Pralinen oder als Bonbonfüllung verwendet.

Das Problem bei der Herstellung sowohl von Karamell- als auch von Schokolade enthaltenden Karamellprodukten ist, dass Karamell beim Abkühlen äußerst zähflüssig und klebrig wird. Diese hohe Viskosität kann bei den Pumpen der Überziehsystemen und Gießanlagen, die bei der industriellen Herstellung solchen Produkte im Einsatz kommen, zu Problemen führen, so dass die erforderliche exakte Dosierung in standarisierten industriellen Herstellungsprozessen sehr schwer zu erreichen ist.

Die Ablagerung von Lebensmitteln, insbesondere geformte Süßwarenprodukte wie Schokolade mit einer viskosen Süßwarenfüllung, wie beispielsweise Karamell, stellt ein großes technisches Problem dar. Üblicherweise umfasst die Herstellung solcher Produkte einen Schritt des Ablagerns in eine Form, um die gewünschte Form für das Endprodukt einzustellen. Dieses Verfahren umfasst den Schritt der Befüllung einer Form durch Injizieren einer abgemessenen Menge eines flüssigen Karamells bzw. einer flüssigen Schokolade mit Hilfe eines Kolbens durch eine Düse in die Form. Anschließend wird das Kühlen oder Trocknen der abgelagerten Masse ausgeführt, bis das Setzen des fertigen Produkts richtig erreicht ist.

Jedoch leidet das oben erwähnte Ablagerungsverfahren bei Süßwaren hoher Viskosität an verschiedenen Nachteilen. Einer der Hauptschwierigkeiten bei Karamell- und Schokoladecremen besteht darin, das Material eines abgelagerten Abschnitts von dem Material zu trennen, das in der Ablagerungsdüse bleibt. Das Material neigt dazu, sich in einem Schwanz auszustrecken, der unter seinem eigenen Gewicht und der Einwirkung der Schwerkraft nicht leicht kollabiert. Dieses Phänomen ist als das "Schwanzbildungs"-Problem bekannt. Dieser Mangel kann in der Folge die Dosiergenauigkeit, das Gewicht und die Form des fertigen geformten Produkts beeinträchtigen. Nach der Befüllung werden viele Fäden quer über die Formen gebildet, die nicht hygienisch sind und deshalb durch Reinigung entfernt werden müssen. Die Schwanzbildung ist auch aus ästhetischen Gründen inakzeptabel und kann größere Qualitätsmängel verursachen. Diese Mängel können zu Schwierigkeiten beim Verpacken und Entwickeln des Produkts führen. Wenn z.B. Karamell in ein hüllengeformtes Schokoladenprodukt abgelagert wird, kann der Schwanz einen Kanal durch die Schokoladenhülle verursachen und an der Verpackung anhaften. Das Schwanzbilden kann auch ein Verstopfen der Düse oder ein Blockieren beweglicher Teile der Ablagerungsvorrichtung verursachen. Andererseits verändert sich die Viskosität des Karamells mit der Temperatur sehr schnell, und das bedeutet, dass Karamell so heiß wie möglich zugegeben werden muss, damit es leicht fließt, andererseits jedoch nicht so heiß, dass es die Schokoladenschale aufschmilzt.

Andererseits werden die Karamell- oder die Schokolade enthaltenden Karamellcremen mit einer niedrigeren Viskosität hergestellt, um die oben genannte Probleme zu vermeiden, werden die karamellisierten Produkte in der Masse so weich, dass das Karamell aus dem hergestellten Endprodukte (z.B. Keksriegel) abtropft, was unter anderem für die Einhaltung der für die Lebensmittelindustrie geltenden strengen hygienischen Vorschriften ein großes Problem darstellt.

Aus dem Stand der Technik sind verschieden Optionen bekannt, um die oben geschilderten Probleme zu überwinden.

GB 2 026 378 betrifft eine Vorrichtung für die Verminderung des Schwanzbildens beim Ablagern hochvisköser Süßwaren, bei der zum Zeitpunkt der Trennung der Süßwarenmasse einen Dampf- oder Druckluftpuls durch die Düse auszustoßen.

Das Dokument US 4,871,573 A betrifft ein Verfahren zur Herstellung eines Milchpulvers, das, bezogen auf das Gewicht der Trockenmaterialen, 20 bis 30 % Fette enthält und worin die Lactose im Wesentlichen in kristallisierter Form vorliegt. Das Verfahren ist dadurch gekennzeichnet, dass man Vollmilch oder Magermilch bei 60 bis 150 °C während einiger Sekunden bis zu 30 Minuten pasteurisiert, dass man die thermisch behandelte Milch bis auf 30 bis 60 Gew.-% Trockenmaterial konzentriert und dass man das Konzentrat auf eine Temperatur unter 40 °C abkühlt, dass man das abgekühlte Konzentrat mit Lactosekristallen mit Abmessungen von kleiner als oder gleich 2 µm beimpft, dass man die Kristallisation der Lactose in Form feiner Kristalle unter langsamen und dauerndem Rühren während 30 Minuten bis 30 Stunden bewirkt, dass man die erhaltene Suspension auf 0 bis 20 °C abkühlt, und dass man das Konzentrat mittels Sprühtrocknung trocknet.

Das Dokument US 5,591,474 A ein Verfahren zur Herstellung einer Schokoladenvorstufe (Chocolate crumb), welches folgende Schritte umfasst:
i) eine Mischung aus Milch und Zucker herstellt,
ii) die erhaltene Mischung auf 105-115 °C erhitzt und auf dieser Temperatur hält, bei der es zur Karamellisierung kommt,
iii) die erhaltene heiße karamellisierte Slurry mit flüssiger Milch vermischt,
iv) das Gemisch trocknet,
v) dem getrockneten Gemisch Kakaoerzeugnisse und andere Zutaten zugibt,
vi) das Produkt für die Lagerung abfüllt.

Der Aufsatz von B. W. Minifie mit dem Titel *"*The manufacture of crumb milk chocolate and other methods of incorporation of milk in chocolate" (Manufacturing Confectioner, 1974, 54, 19-26) gibt eine Übersicht über die Herstellungsverfahren von Crumb Milk Chocolate. In dieser Schrift wird ein Verfahren zur Herstellung von gesüßter Kondensmilch vorgestellt (Seite 23, rechte Spalte), in dem man
i) die flüssige Milch erhitzt und aufkonzentriert,
ii) dem Konzentrat Zucker zugibt,
iii) das erhaltene Gemisch trocknet,
iv) das getrocknete Gemisch mit Laktosekristallen impft.

EP 1 064 842 B1 und DE 601 19 977 T2 beschreiben ein Verfahren zur Herstellung von geformten Schokoladenprodukten mit einer viskosen Füllung wie Karamell. Das Verfahren umfasst die Ausübung von Druck auf die Lebensmittelmasse mit Hilfe einer Druckeinrichtung mit einer Geschwindigkeit, die sich während des Hubs der Druckeinrichtung beschleunigt, den Durchtritt der Lebensmittelmasse durch einen Düsenauslassteil mit vermindertem Durchmesser, das Abstoppen der Abgabe der Lebensmittelmasse mittels eines Ventils, das mit einer Unterbrechungsbewegung von wenigstens 400 mm/s arbeitet.

Diese Verfahren des Stands der Technik haben jedoch den Nachteil, dass sie die Anschaffung von speziellen und komplizierten Vorrichtungen oder Teilen von Vorrichtungen benötigen, was zu einem zusätzlichen technologischen Aufwand und demzufolge zu einer erheblichen Erhöhung der wirtschaftlichen Kosten des Prozesses führt.

Es besteht daher im Gebiet der Lebensmitteltechnologie ein starkes Bedürfnis nach Karamell- und Schokolade enthaltenden Karamellvorstufen, die nach der entsprechenden Verkochung bei der Aufarbeitung und Herstellung der Endsüßwarenprodukten frei von den oben geschilderten Nachteilen sind und deren Herstellung mit einer Standardanlage möglich ist, ohne das Einbauen spezieller und komplizierter Vorrichtungen zu benötigen.

Die Aufgabe der vorliegenden Erfindung hat somit darin bestanden, Karamell- und Schokolade enthaltenden Karamellvorstufen zur Verfügung zu stellen, die eine geringe Viskosität aufweisen und sich leicht abfüllen, pumpen und dosieren lassen, jedoch beim Verkochen so nachdicken, dass die resultierende Karamellen bzw. Schokolade enthaltenden Karamellen hinreichend hoch viskos sind.

Eine zweite Aufgabe der vorliegenden Erfindung hat somit darin bestanden, Karamellvorstufen und Schokolade enthaltenden Karamellvorstufen zur Verfügung zu stellen, die nach Verkochung ein Verdickungsverhalten aufweisen, so dass das Abtropfen aus den Endprodukten, nachdem diese mit dem aus solchen Karamellvorstufen resultierenden Karamell bzw. Schokolade enthaltenden Karamell in den Überziehsystemen und Gießanlagen überzogen worden sind, vermindert wird oder nicht erfolgt.

Eine dritte Aufgabe der vorliegenden Erfindung hat somit darin bestanden, Süßwarenprodukte mit einer viskosen Füllung oder einer viskosen Überzugsmasse, vorzugsweise Karamell oder ein Schokolade enthaltenden Karamell, zur Verfügung zu stellen, die ohne irgendein nennenswertes Schwanzbildungsproblem hergestellt werden können.

Eine vierte Aufgabe der vorliegenden Erfindung hat somit darin bestanden, Süßwarenprodukte mit einer viskosen Füllung oder einer viskosen Überzugsmasse, vorzugsweise Karamell oder ein Schokolade enthaltenden Karamell, zur Verfügung zu stellen, die innerhalb einer einzigen Verpackung angeordnet werden können, ohne dass die Produkte miteinander verkleben, wodurch folglich die benötigte Menge von Verpackungsmaterial vermindert wird.

### BESCHREIBUNG DER ERFINDUNG

Gegenstand der Erfindung sind Karamell- und Schokolade enthaltende Karamellvorstufen mit einem Gehalt an β-Lactoglobulin von mindestens 1,500 mg/L, dadurch erhältlich, dass man
i) eine Mischung aus einem Milch- und/oder Kakaoerzeugnis (Komponente a) und Zucker (Komponente b) herstellt,
ii) das in Schritt i) erhaltene Produkt einer Temperaturbehandlung unterwirft, bei der es zur Karamellisierung kommt, wobei die Karamellisierungstemperatur im Bereich von 100 bis 115 °C liegt,
iii) das in Schritt ii) erhaltene karamellisierte Produkt einem Konzentrierungsschritt unter einem Temperaturgradient von 100 bis 50 °C unterwirft,
iv) das in Schritt iii) erhaltene Konzentrat einer ersten Kühlung unterwirft,
v) das in Schritt iv) erhaltene Produkt mit Kohlenhydratkristallen impft,
vi) das in Schritt v) erhaltene geimpfte Produkt einer zweiten Kühlung unterwirft, und schließlich
vii) das in Schritt vi) erhaltene Produkt abfüllt.

Ein zweiter Gegenstand der Erfindung betrifft ein Verfahren zur Herstellung der oben genannten Karamell- und Schokolade enthaltenden Karamellvorstufen, dadurch gekennzeichnet, das man
i) eine Mischung aus einem Milch- und gegebenenfalls Kakaoerzeugnis (Komponente a) und Zucker (Komponente b) herstellt,
ii) das in Schritt i) erhaltene Produkt einer Temperaturbehandlung unterwirft, bei der es zur Karamellisierung kommt, wobei die Karamellisierungstemperatur im Bereich von 100 bis 115 °C liegt,
iii) das in Schritt ii) erhaltene karamellisierte Produkt einem Konzentrierungsschritt unter einem Temperaturgradient von 100 bis 50 °C unterwirft,
iv) das in Schritt iii) erhaltene Konzentrat einer ersten Kühlung unterwirft,
v) das in Schritt iv) erhaltene Produkt mit Kohlenhydratkristallen impft,
vi) das in Schritt v) erhaltene geimpfte Produkt einer zweiten Kühlung unterwirft, und schließlich
vii) das in Schritt vi) erhaltene Produkt abfüllt.

Überraschenderweise wurde gefunden, dass die Kombination der einzelnen Prozessschritte, insbesondere die Durchführung unter 140 °C eines sehr schonenden Karamelliserungschrittes, zu Karamellvorstufen und Schokolade enthaltenden Karamellvorstufen führen, deren Gehalt an β-Lactoglobulin mindestens 1,500 mg/L beträgt.

Ferner wurde überraschenderweise gefunden, dass solche Karamell- und Schokolade enthaltenden Karamellvorstufen eine genügend niedrig Viskosität aufweisen, dass sie sich leicht abfüllen, pumpen und dosieren lassen, jedoch beim Verkochen so nachdicken, dass die resultierende Karamellen bzw. Schokolade enthaltenden Karamellen hinreichend hoch viskos sind, dass das Abtropfen aus den Endprodukten sowie das Schwanzbildungsproblem und das miteinander Verkleben der Endprodukte vermindert wird oder nicht erfolgt.

Die Karamellvorstufen der vorliegenden Erfindung bestehen im Wesentlichen aus Milcheiweiß, Zucker, Sirup, Fett und Wasser.

In der vorliegenden Erfindung eignet sich ein Vielfaches an Zuckersorten zum Karamellisieren.

Zucker selbst ist ein Kohlenhydrat. Er ist ein Sammelbegriff für alle süß schmeckenden Zucker und gleichwohl die Handelsbezeichnung für den Doppelzucker Saccharose.

In seiner natürlichen Form ist Zucker kristallin und erscheint durch Lichtbrechung weiß. Zucker wird von allen grünen Pflanzen durch Photosynthese aus Sonnenenergie und Kohlendioxid gebildet. Reine Zuckerformen der Natur sind Saccharose, Glukose (Traubenzucker), Fruktose, Galaktose und Maltose. Hauptquellen der Zuckergewinnung sind die Zuckerpalme (Palmzucker), die Zuckerrübe (Rübenzucker) und der Zuckerrohr (Rohrzucker).

Die Zuckersorten, die nach der vorliegenden Erfindung Verwendung finden können, umfassen alle streufähigen Zucker, die in gepulverter, fein-, mittel oder grobkörnig kristalliner Form oder auch gelöst in leicht viskoser Form vorliegen.

Unabhängig von der Zuckerart werden als Beispiele folgende Zuckerorten genannt:
- Raffinade bzw. Kristallzucker, Farin, brauner Zucker, Puderzucker, Grießzucker, Hagelzucker, Instantzucker, Seidenzucker, Kandisfarin, brauner Rohrzucker, Rohrzucker, Rohrohrzucker, Vollrohrzucker, Palmzucker, Kastorzucker,
- Zuckergemische: Vanillezucker, Vanillinzucker, Sirupe (z.B. Ahornsirup, Rübensirup, Birnen-, Apfeldicksaft), Gewürzzucker (Z.B. Zucker mit Zimt, Mandel oder Kardamon)
- Andere Zucker und Zuckerersatzstoffe: Sucrose/Saccharose, Trehalose, Laktose, Maltose, Melizitose, Raffinose, Palatinose, Lactulose, D-Fruktose, D-Glukose, D-GaLaktose, L-Rhamnose, D-Sorbose, D-Mannose, D-Tagatose, D-Arabinose, L-Arabinose, D-Ribose, D-Glycerinaldehyd, Maltodextrin oder Invertzucker. Ebenfalls geeignet sind pflanzliche Zubereitungen, die diese Stoffe enthalten, beispielsweise auf Basis von Zuckerrüben (*Beta vulgaris ssp.,* Zuckerfraktionen, Zuckersirup, Melasse), Zuckerrohr (*Saccharum officinarum ssp.,* Melasse, Zuckerrohrsirup), Ahornsirup (*Acer ssp*.) oder Agaven (Agavendicksaft).

"Sirup" ist eine dickflüssige, konzentrierte Lösung eines Zuckers oder Zuckeraustauschstoffs, die durch Kochen oder andere Techniken, insbesondere durch enzymatische Spaltungsprozesse, aus zuckerhaltigen Flüssigkeiten wie Zuckerwasser, Zuckeraustauschstoff-haltigen Flüssigkeiten, Zuckerrübensaft, Fruchtsäften oder Pflanzenextrakten gewonnen wird. Durch seinen hohen Zuckergehalt ist er auch ohne Kühlung lange haltbar.

In einer bevorzugten Ausführungsform enthalten die Karamellvorstufen und Kakao/Schokolade enthaltenden Karamellvorstufen einen Sirup ausgewählt aus der Gruppe bestehend aus Hexosesirup, Glukosesirup, Fruktosesirup oder Maltitolsirup.

Ein "Hexosesirup" ist im Kontext der vorliegenden Erfindung ein Sirup, welcher als Hauptbestandteil Hexose-Zucker (Einfach- oder Mehrfachzucker) enthält. Bevorzugt handelt es sich dabei um Glukosesirup oder Fruktosesirup, oder um eine Mischung aus diesen beiden Sirups. Ganz besonders bevorzugt ist Glukosesirup. Soll das erfindungsgemäße Basismaterial für ein diätetisches Lebensmittel geeignet sein, so handelt es sich bei dem Sirup bevorzugt um Maltitolsirup oder um Isomalt-Sirup.

"Glukosesirup" ist eine aus Stärke durch enzymatische Aufspaltung gewonnene eingedickte Lösung, die ein Gemisch verschiedener Einfach- und Mehrfachzucker enthält. Einer der Hauptbestandteile ist Glukose (Traubenzucker). Glukosesirup enthält neben Glukose als Einfachzucker nicht selten auch hohe Anteile an Maltose, Maltotriose und Oligosacchariden (z.B. Grafschafter Glukosesirup 43° oder 45°). Glukosesirup wird vorwiegend in der industriellen Lebensmittelproduktion zum Süßen von Speisen und Getränken verwendet. Dadurch ist dieser Sirup eines der wichtigsten Produkte der Stärkeindustrie. Durch die enzymatische Aufspaltung der Stärke können süße Zucker nicht nur aus Zuckerrohr und Zuckerrüben, sondern auch aus ökonomischeren Pflanzen wie Mais, Kartoffeln und Weizen gewonnen werden, was heute großtechnisch im Prozess der Stärkeverzuckerung geschieht. Viele Lebensmittel wie z.B. Bonbons sind ohne einen Zusatz von Glukosesirup nicht herstellbar. Denn Glukosesirup verhindert das Auskristallisieren von Rübenzucker (Saccharose) bei der Herstellung von Hartkaramellen, verlängert die Frischhaltung von Weichkaramellen, Fondant, Gummiund Schaumzuckerwaren, ist eine Zutat von alkoholfreien Erfrischungsgetränken, Likören, Speiseeis, Marmeladen, Fruchtgelees, wird als Süss- und Bräunungsmittel für Backwaren eingesetzt und ist in Müsli, Salatsoßen und Fruchtpulvern enthalten. Glukosesirup schmeckt neutral bis süß und ist in Wasser leicht löslich.

"Fruktosesirup" ist ein klarer, heller Sirup, der unangenehm intensiv süß schmeckt und dessen Zuckeranteil (i.d.R. 70 Gew.-%) zu mindestens 90 %, meist zu mindestens 95 % aus Fruktose besteht (Rest: in der Regel Glukose).

"Maltitolsirup" (E 965 (ii)) besteht aus Maltitol, Sorbitol und gehärtetem Glukosesirup. Isomalt-Sirup besteht aus Isomalt (E 953) und Wasser und wird üblicherweise durch Aufkochen des Isomalt in Wasser hergestellt. Beide Siruparten sind Zuckeraustauschstoffe (Lebensmittelsüßstoffe) und werden zur Herstellung diätetischer Lebensmittel oder Futtermittel verwendet. Maltitolsirup dient insbesondere als Lebensmittelzusatzstoff für Säfte, Marzipan und Kaugummi. Isomalt findet bevorzugt Einsatz in Desserts, Eis und Süßwaren.

In Sinne dieser Erfindung umfasst der Begriff "Milch" alle als lebensmittelrechtlich verstandenen Milchsorten der Kuh mit ihren handelsüblichen Fettgehalten: Vollmilch, Magermilch, fettreduzierte Milch, Molke, kondensierte Milch oder Sahne, sowie die eingesetzten, unterschiedlichen Behandlungstechnologien: Pasteurisation, Sterilisation, Ultrahocherhitzung sowie Homogenisierung.

Der Begriff "Schokolade" soll alle Schokoladen- oder schokoladenähnliche Zusammensetzungen mit einer Fett- oder fettähnlichen Phase bezeichnen. Der Begriff schließt alle Schokoladen- und schokoladenähnlichen Zusammensetzungen ein, die wenigstens eine Kakao- oder kakaoähnliche Komponente in der fettähnlichen Phase enthalten. Der Begriff soll z. B. standardisierte und nicht-standardisierte Schokoladen einschließen, d. h. einschließlich Schokoladen mit Zusammensetzungen, die den U. S. Standards of Identiy (SOI) entsprechen, bzw. Zusammensetzungen, die den SOI nicht entsprechen, einschließlich dunkler Schokolade, Backschokolade, Milchschokolade, süßer Schokolade, halbsüßer Schokolader, Buttermilchschokolade, Magermilchschokolade, Schokolade aus gemischten Molkereiprodukten, Schokolade mit niedrigem Fettgehalt, weißer Schokolade, nicht-standardisierten Schokoladen, Umhüllungen und schokoladenähnlichen Zusammensetzungen, sofern nicht spezifisch anders identifiziert.

Die Fettphase der Schokolade der vorliegenden Erfindung kann Kakaobutter, Milchfett, hydrierte oder teilweise hydrierte pflanzliche Öle oder Fette (fraktioniert oder nichtfraktioniert), wasserfreies Milchfett, Butteröl und andere Fette oder Mischungen von Kakaobutter mit diesen anderen fettähnlichen Zusammensetzungen einschließen. Siehe ***"***Minifie, Chocolate, Cocoa and Confectionary: Science and Technology", 3. Ausgabe. Die Fettphase kann Fettsysteme einschließen, die nicht-temperierend oder nicht-zusammenziehend oder beides sind.

Schokoladen schließen auch diejenigen ein, die Brockenfeststoffe enthält oder Feststoffe, die vollständig oder teilweise mit einem Brockenverfahren hergestellt werden.

Nicht-standardisierte Schokoladen erhält man, wenn nährende Kohlehydrat-Süßstoffe teilweise oder vollständig ersetzt werden; oder wenn die Kakaobutter oder das Milchfett teilweise oder vollständig ersetzt wird; oder wenn Komponenten, die Geschmackseigenschaften haben, die Milch, Butter oder Schokolade imitieren, zugesetzt werden oder andere Zusätze oder Weglassungen in der Formel außerhalb der USFDA-Standards of Identity von Schokolade vorgenommen werden oder Kombinationen davon.

Der Begriff "schokoladenähnliche Zusammensetzungen" bezeichnet Zusammensetzungen mit Schokoladengeschmack, die Feststoffteilchen enthalten, die in einer Fett- oder fettähnlichen Phase dispergiert sind.

Der Begriff "Temperierung" bezeichnet das Vorhandensein von stabilen Fettkristallen in einer Schokolade. Der Grad oder das Niveau der Temperierung einer Schokolade kann mit kommerziell verfügbaren Instrumenten gemessen werden, die das Verhalten in einer Schokoladenprobe während gesteuerter Abkühlung charakterisiert.

Ein Beispiel für diese Art von Instrument ist das Tricor Tempermeter [Tricor instruments, Elgin, III.], das in einer Standardausführungsform Schokoladentemperierung während eines 5-minütigen gesteuerten Abkühltests bestimmt. Das Tempermeter bestimmt und misst einen Infektionspunkt in einer Temperatur/Zeit-Kurve. Die Temperierungseinheiten können ausgedrückt werden als Schokoladentemperierungseinheit (CTU) und/oder als eine Steigungsmessung. CTU-Messungen können ausgedrückt werden in entweder der Fahrenheit- oder Celsius-Temperaturskala. Alle CTU-Messungen, auf die hierin Bezug genommen wird, sind in der Fahrenheit-Skala, sofern nicht anders spezifiziert. Fahrenheit-CTU-Messungen können in Celsius-Messungen durch dividieren durch einen Faktor von 1,8 umgewandelt werden. Höhere CTU-Werte und geringere Steigungswerte entsprechen höheren Temperierungsniveaus.

Der Begriff "Fette", wie hierin verwendet, bezeichnet Triglyceride, Diglyceride und Monoglyceride oder andere fettähnliche Materialien, die normalerweise in Süsswaren auf Fettbasis verwendet werden können, einschließlich Schokoladen und schokoladenähnlicher Produkten. Fette schließen die natürlich vorkommenden Fette und Öle ein, wie etwa Kakaobutter, gepresste Kakaobutter, Expeller-Kakaobutter, mit Lösungsmittel extrahierte Kakaobutter, raffinierte Kakaobutter, Milchfett, wasserfreies Milchfett, fraktioniertes Milchfett, Milchfett-Ersatzstoffe, Butterfett, fraktioniertes Butterfett, Fette (fraktioniert oder nichtfraktioniert), Pflanzenfette, Pflanzenfette, modifizierten Pflanzenfette und synthetisch modifizierte Fette, wie etwa Caprenin.

Die Karamell- und Schokolade enthaltende Karamellvorstufen der vorliegenden Erfindung können auch andere Inhaltsstoffe enthalten, z.B. Verdickungsmittel und Emulgatoren.

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder Ionenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:

| | |
|---|---|
| E 400 | - Alginsäure |
| E 401 | - Natriumalginat |
| E 402 | - Kaliumalginat |
| E 403 | - Ammoniumalginat |
| E 404 | - Calciumalginat |
| E 405 | - Propylenglycoalginat |
| E 406 | - Agar Agar |
| E 407 | - Carrgeen, Furcelleran |
| E 408 | - Johannisbrotkernmehl |
| E 412 | - Guarkernmehl |
| E 413 | - Traganth |
| E 414 | - Gummi arabicum |
| E 415 | - Xanthan |
| E 416 | - Karaya (Indischer Traganth) |
| E 417 | - Trakernmehl (Peruanisches Johannisbrotkernmehl) |
| E 418 | - Gellan |
| E 440 | - Pektin, Opekta |
| E 440ii | - Amidiertes Pektin |
| E 460 | - Mikrokristalline Cellulose, Cellulosepulver |
| E 461 | - Methylcellusose |
| E 462 | - Ethylcellulose |
| E 463 | - Hydroxypropylcellulose |
| E 465 | - Methylethylcellulose |
| E 466 | - Carboxymethylcellulose, Natriumcarboxymethylcellulose |

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen. Geeignete Emulgatoren, die in der lebensmittelverarbeitenden Industrie verwendet, werden sind ausgewählt aus: Ascorbylpalmitat (E 304), Lezithin (E 322), Phosphorsäure (E 338), Natriumphosphat (E 339), Kalziumphosphat (E 341), Magnesiumorthophosphat (E 343), Propylenglykolalginat (E 405), Polyoxyethylen(8)stearat (E 430), Polyoxyethylenstearat (E 431), Ammoniumphosphatide (E 442), Natriumphosphat und Kaliumphosphat (E 450), Natriumsalze der Speisefettsäuren (E 470 a), Mono- und Diglyceride von Speisefettsäuren (E 471), Essigsäuremonoglyceride (E 472 a), Milchsäuremonoglyceride (E 472 b), Zitronensäuremonoglyceride (E 472 c), Weinsäurempnoglyceride (E 472 d), Diacetylweinsäuremonoglyceride (E 472 e), Zuckerester von Speisefettsäuren (E 473), Zuckerglyceride (E 474), Polyglyceride von Speisefettsäuren (E 475), Polyglycerin-Polyricinoleat (E 476), Propylenglykolester von Speisefettsäuren (E 477), Natriumstearoyllaktylat (E 481), Calciumstearoyl-2-lactylat (E 482), Stearyltartrat (E 483), Sorbitanmonosterat (E 491), Stearinsäure (E 570).

Zur Herstellung der Karamell- und Schokolade enthaltende Karamellvorstufen erfolgt zunächst die Vermischung -Schritt i) des Verfahrens - eines Milch - und/oder Kakaoerzeugnisses (Komponente a) und Zucker (Komponente b). Dies findet üblicherweise in einem Rotorkocher statt. Derartige Bauteile sind aus dem Stand der Technik hinreichend bekannt.

Dabei werden die Komponente a und b in einer Rührvorrichtung im Gewichtsverhältnis von 40:60 bis 60:40 und insbesondere 50:50 gemischt, so dass eine Zubereitung entsteht, die eine Trockenmasse von 25 bis 40 Gew.-% und insbesondere von 30 bis 35 Gew.-% aufweist.

Daraufhin wird die erhaltene Mischung unter sehr milden Bedingungen karamellisiert -Schritt ii)- und anschließend wird das erhaltene Konzentrat in einen Eindampfer, vorzugsweise einen Fallstromverdampfer eingespeist - Schritt iii)- und schonend entwässert.

Der Gehalt an β-Lactoglobulin der erfindungsgemäßen Karamell- und Schokolade enthaltenden Karamellvorstufffe stellte sich von entscheidende Bedeutung heraus, um Karamelle bzw. Schokolade enthaltenden Karamelle mit der erwünschten Verdickungsverhalten herstellen zu können.

β-Lactoglobulin ist jene Molkeneiweißkomponente, die nach Caseinpräzipitation bei pH 4,6 und Raumtemperatur (20° C) in Molke bleibt. Mit einem durchschnittlichen Gehalt von 3,5 g/L Milch bildet β-Lactoglobulin die Hauptkomponente des Molkeneiweißgemisches. Es liegt hauptsächlich als Dispersion (molekular) vor.

Aufgrund des hohen Anteils an essentiellen α-Aminosäuren - vor allem Lysin- ist β-Lactoglobulin ernährungsphysiologisch von sehr großer Bedeutung. Die basische Aminosäure Lysin spielt eine wichtige Rolle als Carnitinvorstufe und ist eine Komponente des Kollagens (als hydroxylierte Form). Als Regulator der Biosynthese von Proteinen fungiert die essentielle Aminosäure Tryptophan.

Des Weiteren ist es an der Niacin- sowie Serotoninbildung beteiligt. Das schwefelhaltige Methionin ist die Vorstufe von Cystein sowie Taurin und fungiert als Methyldonator bei diversen biochemischen Prozessen. Phenylalanin dient als Vorstufe der Tyrosinsynthese und ist an der Bildung von Melanin, Adrenalin und Thyroxin beteiligt.

Das β-Lactoglobulinmolekül wird gebildet aus 162 Aminosäuren und weist eine molare Masse von 18277 g·mol⁻¹ (=18,277 kDA als Monomer) auf. Das globuläre Molekül, welches als Dimer in der Milch vorliegt, hat sieben genetische Varianten (A, B, C, D, E, F, G), wobei Variante A und B am häufigsten auftreten. Bei einem pH-Wert zwischen 5,2 und 7 liegt β-Lactoglobulin als Dimer vor, bei einem pH-Wert zwischen 3,5 und 5,2 als Oktamer und bei pH 3 und > 8 als Monomer.

Das native β-Lactoglobulin-Molekül besitzt neun antiparallele Faltblattstrukturen. Davon bilden acht zusammen mit einer dreidimensionalen α-Helix einen sogenannten Kelch. Dieser besteht aus zwei Strängen, wobei das 1. Blatt sich aus den Strukturen A, B, C, D zusammensetzt und die Strukturen E, F, G und H das 2. Blatt ausbilden. Eine sehr reaktive Thiolgruppe besitzt das Cystein 121, welches an Denaturierungs- und Aggregationsreaktionen beteiligt ist. Die übrigen vier Cysteinreste können zur Bildung von Disulfidbrücken, jeweils zwei, führen. Der Phenylring des Phe 136 trennt das Cys 121 von der Disulfidbrücke, welche zwischen Cys 106 und 119 besteht.

In vitro ist β-Lactoglobulin am Transport von Retinol und Fettsäuren (langkettigen) beteiligt, sowie auch am Vitamin D- und Cholesterintransfer (bei einem pH-Wert von 5). Des Weiteren hat β-Lactoglobulin Einfluss auf die Regulation des Phosphorstoffwechsels in der Milchdrüse. Darüber hinaus spielt die Aminosäurezusammensetzung eine große Rolle. β-Lactoglobulin weist einen hohen Anteil an Cysteinen auf, welche bei der Gluthation-Synthese einen Einfluss haben.

Der Aufschluss des Milchfettes wird gefördert, indem β-Lactoglobulin freie Fettsäuren bindet. Das Molkeprotein β-Lactoglobulin und das im Plasma vorkommende Retinolbindungsprotein besitzen einige genetische Übereinstimmungen. Dadurch resultiert die Annahme, dass die intestinale Aufnahme von Retinol und langkettigen Fettsäuren durch die Anwesenheit von β-Lactoglobulin, beim noch nicht geborenen Kalb, gefördert wird.

Molkeproteine weisen eine unterschiedliche Empfindlichkeit gegenüber Wärmeeinwirkung auf und können aufgrund ihres Grades der Denaturierung zur Klassifizierung der Hitzeeinwirkung herangezogen werden. So ist die Hitzelabilität der Molkeproteinfraktion wie folgendes: α-Lactalbumin < β-Lactoglobulin < Serumalbumin < Immunoglobuline.

Bei einer Erhitzung über 70° C erfolgt die Denaturierung der Molkeproteine, welches zu einer Veränderung der Struktur und damit einhergehend zur Ausbildung anderer spezifischer Merkmale sowie die Abnahme der Löslichkeit - vor allem β-Lactoglobulin - führt. Das β-Lactoglobulin in seiner dimeren Struktur dissoziiert in ein Monomer. Bei Anwesenheit von großer Calziumionenkonzentration und einem pH>8,6 ist die Denaturierung nicht mehr reversibel.

Mit Hilfe der Reaktionskinetik lassen sich die chemischen Veränderungen der beiden Hauptmolkeproteinfraktionen bei Temperaturen von 86° - 140° C erläutern. Während der Denaturierung wird die globuläre Struktur der Molkeproteine entfaltet und es kommt zu Komplexbildungen innerhalb der Molkeproteinfraktion, aber auch mit anderen Proteinen der Milch vor allem mit κ-Caseinen. Ihre Tendenz zur Denaturierung bei Erhitzung beruht auf dem hohen Gehalt an schwefelhaltigen α-Aminosäuren Cystein und Cystin. Kommt es zu einer Wärmeeinwirkung werden die Disulfidbindungen aufgebrochen, Sylfhydrylgruppen (H₂S) freigesetzt und es kommt zur Bildung von Dimethylsulfid (CH₃)₂S, welches für den Kochgeschmack verantwortlich ist (in hocherhitzten Milchprodukten).

Mit steigender Temperatur und Heißhaltezeiten steigt der Denaturierungsgrad der Molkenproteine. Weist die Milch eine hohe totale Eiweißkonzentration auf, so ist die Denaturierungsgeschwindigkeit der Molkeproteine ebenfalls erhöht.

Ein Gehalt an β-Lactoglobulin von mindestens 1500 mg/L in den erfindungsgemäßen Karamell- und Schokolade enthaltenden Karamellvorstufffe zeigte sich als besonders günstig, um Endprodukte mit der erwünschten Verdickungsverhalten herstellen zu können.

In einer anderen bevorzugten Ausführungsform liegt der Gehalt an β-Lactoglobulin in den erfindungsgemäßen Karamell- und Schokolade enthaltenden Karamellvorstufe im Bereich von 1500 und 7000 mg/L, vorzugsweise 6000 und 2000 mg/L, und insbesondere bevorzugt von 3000 und 5000 mg/L.

Der Gehalt an β-Lactoglobulin kann mittels verschiedener Methoden bestimmt werden, beispielweise HPLC (High Performance Liquid Chromatography), Reversed-Phase HPLC, SDS-PAGE (Sodium-Dodecyl-Sulfat-Polyacrylamidgelelektrophorese) oder Native PAGE (Native Polyacrylamidelektrophorese).

Diese analytischen Methoden sind für den Fachman bestens bekannt und können von ihm auf der Grundlage seines allgemeinen Wissens vorgenommen werden, ohne dazu erfinderisch tätig zu werden.

Es hat sich herausgestellt, dass die technischen Parameter des Karamellisierungsschritt ii) und die anschließende Entwässerungsschritt - Schritt iii) -von entscheidenden Bedeutung sind, um das Denaturieungsprozess des β-Lactoglobulins, welches aufgrund des für die Karamellisierung erforderlichen Erhitzen erfolgt, in der Masse zu inhibieren, so dass die mittels des erfindungsgemäßen Verfahren hergestellten Karamell- bzw. - Schokolade enthaltenden Karamellvorstufe genug nicht-denaturierte β-Lactoglobulin aufweisen, das sie in eine spätere Verkochung bei der Herstellungsprozesse von Süßwaren noch die erforderliche Viskosität aufweisen.

In einer bevorzugten Ausführungsform liegt die Temperatur des Karamellisierungsschritt ii) im Bereich von 105 bis 110 °C.

In einer anderen bevorzugten Ausführungsform ist die Karamellisierungstemperatur des Schrittes ii) maximal 110 °C, und insbesondere bevorzugt 105 °C.

In einer anderen bevorzugten Ausführungsform liegt der Temperaturgradient bei der Konzentrierung des Schrittes iii) im Bereich von 90 bis 55°C.

Als besonders günstig für die Inhibierung der Denaturierung des β-Lactoglobulins hat sich herausgestellt, wenn die Karamellisierungstemperatur des Schrittes ii) maximal von 110 °C ist, und die Konzentrierung des Schrittes iii) unter einem Temperaturgradient von 80 auf 60 °C erfolgt.

Das im Schritt iii) erhaltene aber noch pumpbare Konzentrat wird zunächst in Schritt iv) auf 30 bis 40 °C abgekühlt. Das Konzentrat ist an dieser Stelle überzuckert. Das bedeutet, dass Zucker würde beginnen sich abzuschneiden, was zu einer Unregelmäßigkeit in den rheologischen Eigenschaften des Endproduktes führen würde. Daher wird die Lösung im Schritt v) mit Kohlenhydratkristallen geimpft, die das Lösungsgleichgewicht wieder verschieben.

Als Kohlenhydrate kommen hier in erster Linie Laktose, Glukose und Maltose in Betracht. Die Einsatzmenge liegt bei 150 bis 250 und vorzugsweise bei etwa 200 g pro 1000 kg Konzentrat, entsprechend etwa 0,2 Gew.-%. Anschließend wird die Lösung im Schritt vi) auf 20 bis 25 °C wieder abgekühlt und das erhaltene Produkt abgefüllt.

### GEWERBLICHE ANWENDBARKEIT

Gemäß der vorliegenden Erfindung können die Karamell- und Schokolade enthaltenden Karamellvorstufen mit einem Gehalt an β-Lactoglobulin von mindestens etwa 1500 mg/L. Hergestellt werden Solche Karamell- und Schokolade enthaltenden Karamellvorstufen weisen eine genügend niedrig Viskosität auf, dass sie sich leicht abfüllen, pumpen und dosieren lassen, jedoch beim Verkochen so nachdicken, dass die resultierende Karamellen bzw. Schokolade enthaltenden Karamellen hinreichend hoch viskos sind, dass das Abtropfen aus den Endprodukten sowie das Schwanzbildungsproblem und das miteinander Verkleben der Endprodukte vermindert wird oder nicht erfolgt.

### BEISPIELE

### Beispiel 1

Eine Mischung bestehend aus Kakaopulver, Vollmilch und Kristallzucker im Gewichtsverhältnis 49:51 und einer Trockenmasse von 40 Gew.-% wurde unter ständigem Rühren in einem Rotorkocher 4 Sekunden bei 110 °C erwärmt. Das erhaltene karamellisierte Produkt wurde in einem Fallstromverdampfer unter Anlegen eines Temperaturgradienten von 90 auf 60 °C bis zu einer Trockenmasse von 70-80 Gew.-% eingedampft. Das gewonnene Konzentrat wurde auf 30 °C abgekühlt, und dann mit 0,2 Gew.-% kristalliner Laktose versetzt und intensiv gerührt. Anschließend wurde die erhaltene Karamellvorstufe auf 20 °C abgekühlt und dann abgefüllt. Der Gehalt an β-Lactoglobulin des erhaltenen Endprodukts betrug 3200 mg/L.

### Beispiel 2

Eine Mischung bestehend aus Magermilch und Kristallzucker im Gewichtsverhältnis 45:55 und einer Trockenmasse von 40 Gew.-% wurde unter ständigem Rühren in einem Rotorkocher 4 Sekunden bei 110 °C erwärmt. Das erhaltene karamellisierte Produkt wurde in einem Fallstromverdampfer unter Anlegen eines Temperaturgradienten von 90 auf 60 °C bis zu einer Trockenmasse von 70-80 Gew.-% eingedampft. Das gewonnene Konzentrat wurde auf 30 °C abgekühlt, und dann mit 0,2 Gew.-% kristalliner Laktose versetzt und intensiv gerührt. Anschließend wurde die erhaltene Karamellvorstufe auf 20 °C abgekühlt und dann abgefüllt. Der Gehalt an β-Lactoglobulin des erhaltenen Endprodukts betrug 1650 mg/L.

### Vergleichsbeispiel V1

Eine Mischung bestehend aus Vollmilch und Kristallzucker im Gewichtsverhältnis 49:51 und einer Trockenmasse von 33 Gew.-% wurde unter ständigem Rühren in einem Rotorkocher 4 Sekunden bei 140 °C erwärmt. Das erhaltene karamellisierte Produkt wurde in einem Fallstromverdampfer unter Anlegen eines Temperaturgradienten von 90 auf 60 °C bis zu einer Trockenmasse von 70-80 Gew.-% eingedampft. Das gewonnene Konzentrat wurde auf 30 °C abgekühlt, und dann mit 0,2 Gew.-% kristalliner Laktose versetzt und intensiv gerührt. Anschließend wurde die erhaltene Karamellvorstufe auf 20 °C abgekühlt und dann abgefüllt. Der Gehalt an β-Lactoglobulin des erhaltenen Endprodukts betrug 200 mg/L.

### Vergleichsbeispiel V2

Eine Mischung bestehend aus Vollmilch und Kristallzucker im Gewichtsverhältnis 49:51 und einer Trockenmasse von 33 Gew.-% wurde unter ständigem Rühren in einem Rotorkocher 4 Sekunden bei 140 °C erwärmt. Das erhaltene karamellisierte Produkt wurde in einem Fallstromverdampfer unter Anlegen eines Temperaturgradienten von 100 auf 60 °C bis zu einer Trockenmasse von 70-80 Gew.-% eingedampft. Das gewonnene Konzentrat wurde auf 30 °C abgekühlt, und dann mit 0,2 Gew.-% kristalliner Laktose versetzt und intensiv gerührt. Anschließend wurde die erhaltene Karamellvorstufe auf 20 °C abgekühlt und dann abgefüllt. Der Gehalt an β-Lactoglobulin des erhaltenen Endprodukts betrug 300 mg/L.

### Ergebnisse

Die Karamellvorstufe der Beispiele 1-3 sowie die Vergleichsbeispiele V1-V2 sind unter gleichen Bedingungen verkocht worden, und das erhaltene flüssiges Karamell als Überzugsmasse oder Füllungsmaterial in standardesirten Produkte verwendet. Die Ergebnisse sind in Tabelle 1 zusammengefasst.

**Tabelle 1**

| Anwendungstechnische Prüfungen | | | |
|---|---|---|---|
| **Beispiele** | **Abtropfen** | **Schwanzbildung** | **Verkleben** |
| 1 | x | x | x |
| 2 | x | x | x |
| V1 | √ | √ | √ |
| V2 | √ | √ | √ |

| | | | |
|---|---|---|---|
| x: nicht beobachtet √: beobachtet | | | |

Die erhaltenen flüssigen Karamellen sind als Überzugsmasse von Keksriegeln verwendet worden, und das Abtropfen aus Keksriegeln des Karamells wurde nach 30 Sekunden optisch kontrolliert.

Standard Schokoladehüllen (10 Stück), miteinander getrennt von 10 mm, sind mit den erhaltenen flüssigen Karamellen gefüllt worden. Die Schwanzbildung und das "miteinander Verkleben" der nebeneinander liegenenden Schokoladehüllen wurde nach 30 Sekunden optisch kontrolliert.

Die Ergebnisse der Tabelle 1 zeigen deutlich, dass nur die aus Karamellvorstufe mit einem Gehalt an β-Lactoglobulin < 1500 mg/L stammenden Karamellen bei ihrer praktischer Anwendung die unerwünschten Effekten aufweisen. Dagegen sind die Karamellen, die aus den erfindungsgemäßen Karamellvorstufen hergestellt worden sind, frei von diesen Effekten.

## Patentansprüche

1. Karamell- und Schokolade enthaltende Karamellvorstufen mit einem Gehalt an β-Lactoglobulin von mindestens 1,500 mg/L, dadurch erhältlich, dass man
i) eine Mischung aus einem Milch- und gegebenenfalls Kakaoerzeugnis (Komponente a) und Zucker (Komponente b) herstellt,
ii) das in Schritt i) erhaltene Produkt einer Temperaturbehandlung unterwirft, bei der es zur Karamellisierung kommt, wobei die Karamellisierungstemperatur im Bereich von 100 bis 115 °C liegt,
iii) das in Schritt ii) erhaltene karamellisierte Produkt einem Konzentrierungsschritt unter einem Temperaturgradient von 100 bis 50 °C unterwirft,
iv) das in Schritt iii) erhaltene Konzentrat einer ersten Kühlung unterwirft,
v) das in Schritt iv) erhaltene Produkt mit Kohlenhydratkristallen impft,
vi) das in Schritt v) erhaltene geimpfte Produkt einer zweiten Kühlung unterwirft, und schließlich
vii) das in Schritt vi) erhaltene Produkt abfüllt.

2. Karamellvorstufen nach Anspruch 1, **dadurch gekennzeichnet, dass** es sich bei dem Milcherzeugnis um Vollmilch, Magermilch, fettreduzierte Milch, Molke, kondensierte Milch oder Sahne handelt.

3. Verfahren zur Herstellung von Karamell- und Schokolade enthaltenden Karamellvorstufen nach Anspruch 1, **dadurch gekennzeichnet,** das man
i) eine Mischung aus einem Milch- und gegebenenfalls Kakaoerzeugnis (Komponente a) und Zucker (Komponente b) herstellt,
ii) das in Schritt i) erhaltene Produkt einer Temperaturbehandlung unterwirft, bei der es zur Karamellisierung kommt, wobei die Karamellisierungstemperatur im Bereich von 100 bis 115 °C liegt,
iii) das in Schritt ii) erhaltene karamellisierte Produkt einem Konzentrierungsschritt unter einem Temperaturgradient von 100 bis 50 °C unterwirft,
iv) das in Schritt iii) erhaltene Konzentrat einer ersten Kühlung unterwirft,
v) das in Schritt iv) erhaltene Produkt mit Kohlenhydratkristallen impft,
vi) das in Schritt v) erhaltene geimpfte Produkt einer zweiten Kühlung unterwirft, und schließlich
vii) das in Schritt vi) erhaltene Produkt abfüllt.

4. Verfahren nach Anspruch 3, **dadurch gekennzeichnet, dass** man als Milcherzeugnis Vollmilch, Magermilch, fettreduzierte Milch, Molke, kondensierte Milch oder Sahne einsetzt.

5. Verfahren nach mindestens einem der Ansprüche 3 bis 4, **dadurch gekennzeichnet, dass** man im Schritt i) eine Mischung einsetzt, die die Komponenten a) und b) im Gewichtsverhältnis von 40:60 bis 60:40 enthält.

6. Verfahren nach mindestens einem der Ansprüche 3 bis 5, **dadurch gekennzeichnet, dass** man im Schritt i) eine Mischung einsetzt, die eine Trockenmasse von 25 bis 40 Gew.-% aufweist.

7. Verfahren nach mindestens einem der Ansprüche 3 bis 6, **dadurch gekennzeichnet, dass** man die Karamellisierung im Schritt ii) bei einer Temperatur im Bereich von 105 bis 110 °C durchführt.

8. Verfahren nach mindestens einem der Ansprüche 3 bis 7, **dadurch gekennzeichnet, dass** bei der Konzentrierung des Schrittes iii) einen Temperaturgradienten im Bereich von 100 bis 60 °C anlegt.

9. Verfahren nach mindestens einem der Ansprüche 3 bis 8, **dadurch gekennzeichnet, dass** man die Karamellisierung im Schritt ii) bei einer maximalen Temperatur von 110 °C und die Konzentrierung des Schrittes iii) unter einem Temperaturgradient von 90 auf 60 °C erfolgt.

10. Verfahren nach mindestens einem der Ansprüche 3 bis 9, **dadurch gekennzeichnet, dass** man das in Schritt iv) erhaltene Produkt mit Kohlenhydratkristallen ausgewählt aus der Gruppe bestehend aus Laktose-, Glukose-und Maltosekristallen, impft.

11. Verfahren nach mindestens einem der Ansprüche 3 bis 10, **dadurch gekennzeichnet, dass** man die erste und die zweite Kühlung (Schritte iv und vi) bei Temperaturen im Bereich von 30 bis 40 °C bzw. 20 bis 25 °C durchgeführt.

12. Verwendung von Karamellvorstufen nach Anspruch 1 bzw. nach dem Verfahren gemäß mindestens einem der Ansprüche 3 bis 11 zur Herstellung von Süßwaren.

## Claims

1. Caramel- and chocolate-containing caramel precursors having an amount of β-lactoglobulin of at least 1.500 mg/L, obtainable by
i) preparing a mixture of a milk product and optionally cocoa product (component a) and sugar (component b),
ii) subjecting the product obtained in step i) to a temperature treatment at which caramelization occurs, wherein the temperature of the caramelization is in the range from 100 to 115 °C,
iii) subjecting the caramelized product obtained in step ii) to a concentration step under a temperature gradient from 100 to 50 °C,
iv) subjecting the concentrate obtained in step iii) to a first cooling,
v) seeding the product obtained in step iv) with carbohydrate crystals,
vi) subjecting the seeded product obtained in step v) to a second cooling, and finally
vii) dispensing the product obtained in step vi).

2. The caramel precursors according to claim 1, wherein the milk product is whole milk, skimmed milk, fat-reduced milk, whey, condensed milk or cream.

3. Method for manufacturing caramel- and chocolate-containing caramel precursors according to claim 1, comprising the steps:
i) preparing a mixture of a milk product and optionally cocoa product (component a) and sugar (component b),
ii) subjecting the product obtained in step i) to a temperature treatment at which caramelization occurs, wherein the temperature of the caramelization is in the range from 100 to 115 °C,
iii) subjecting the caramelized product obtained in step ii) to a concentration step under a temperature gradient from 100 to 50 °C,
iv) subjecting the concentrate obtained in step iii) to a first cooling,
v) seeding the product obtained in step iv) with carbohydrate crystals,
vi) subjecting the seeded product obtained in step v) to a second cooling, and finally
vii) dispensing the product obtained in step vi).

4. The method according to claim 3, wherein the milk product is whole milk, skimmed milk, fat-reduced milk, whey, condensed milk or cream.

5. Method according to at least one of claims 3 to 4, wherein the mixture of step i) comprises components a) and b) in a weight ratio of 40:60 to 60:40.

6. Method according to at least one of claims 3 to 5, wherein the mixture of step i) has a dry mass of 25 to 40 wt %.

7. Method according to at least one of claims 3 to 6, wherein the caramelization in step ii) is carried out at a temperature in the range from 105 to 110 °C.

8. Method according to at least one of claims 3 to 7, wherein the temperature gradient n the concentration of step iii) ranges from 100 to 60 °C.

9. Method according to at least one of claims 3 to 8, wherein the caramelization in step ii) takes place at a maximum temperature of 110 °C and the concentration of step iii) takes place under a temperature gradient of 90 to 60 °C.

10. Method according to at least one of claims 3 to 9, wherein the product obtained in step iv) is seeded with carbohydrate crystals selected from the group consisting of lactose, glucose and maltose crystals.

11. Method according to at least one of claims 3 to 10, wherein the first and second cooling (steps iv and vi) are carried out at temperatures in the range from 30 to 40 °C and 20 to 25 °C, respectively.

12. Use of caramel precursors according to claim 1 or according to the process according to at least one of claims 3 to 11 for the production of confectionery.

## Revendications

1. Précurseurs de caramel contenant du caramel et du chocolat ayant une teneur en β-lactoglobuline d'au moins 1500 mg/l, pouvant être obtenus en ce que
i) un mélange d'un produit de lait et éventuellement de cacao (composant a) et de sucre (composant b) est fabriqué,
ii) le produit obtenu à l'étape i) est soumis à un traitement thermique lors duquel une caramélisation se produit, la température de caramélisation se situant dans la plage allant de 100 à 115 °C,
iii) le produit caramélisé obtenu à l'étape ii) est soumis à une étape de concentration sous un gradient de température de 100 à 50 °C,
iv) le concentré obtenu à l'étape iii) est soumis à un premier refroidissement,
v) le produit obtenu à l'étape iv) est inoculé avec des cristaux d'hydrate de carbone,
vi) le produit inoculé obtenu à l'étape v) est soumis à un deuxième refroidissement, et enfin
vii) le produit obtenu à l'étape vi) est mis en bouteilles.

2. Précurseurs de caramel selon la revendication 1, **caractérisés en ce que** le produit de lait consiste en du lait entier, du lait écrémé, du lait à teneur réduite en matières grasses, du lactosérum, du lait condensé ou de la crème.

3. Procédé de fabrication de précurseurs de caramel contenant du caramel et du chocolat selon la revendication 1, **caractérisé en ce que**
i) un mélange d'un produit de lait et éventuellement de cacao (composant a) et de sucre (composant b) est fabriqué,
ii) le produit obtenu à l'étape i) est soumis à un traitement thermique lors duquel une caramélisation se produit, la température de caramélisation se situant dans la plage allant de 100 à 115 °C,
iii) le produit caramélisé obtenu à l'étape ii) est soumis à une étape de concentration sous un gradient de température de 100 à 50 °C,
iv) le concentré obtenu à l'étape iii) est soumis à un premier refroidissement,
v) le produit obtenu à l'étape iv) est inoculé avec des cristaux d'hydrate de carbone,
vi) le produit inoculé obtenu à l'étape v) est soumis à un deuxième refroidissement, et enfin
vii) le produit obtenu à l'étape vi) est mis en bouteilles.

4. Procédé selon la revendication 3, **caractérisé en ce que** du lait entier, du lait écrémé, du lait à teneur réduite en matières grasses, du lactosérum, du lait condensé ou de la crème est utilisé en tant que produit de lait.

5. Procédé selon au moins l'une quelconque des revendications 3 à 4, **caractérisé en ce qu'**un mélange qui contient les composants a) et b) en un rapport en poids de 40:60 à 60:40 est utilisé à l'étape i).

6. Procédé selon au moins l'une quelconque des revendications 3 à 5, **caractérisé en ce qu'**un mélange qui présente une masse sèche de 25 à 40 % en poids est utilisé à l'étape i).

7. Procédé selon au moins l'une quelconque des revendications 3 à 6, **caractérisé en ce que** la caramélisation à l'étape ii) est réalisée à une température dans la plage allant de 105 à 110 °C.

8. Procédé selon au moins l'une quelconque des revendications 3 à 7, **caractérisé en ce qu'**un gradient de température dans la plage allant de 100 à 60 °C est appliqué lors de la concentration de l'étape iii).

9. Procédé selon au moins l'une quelconque des revendications 3 à 8, **caractérisé en ce que** la caramélisation à l'étape ii) a lieu à une température maximale de 110 °C et la concentration de l'étape iii) sous un gradient de température de 90 à 60 °C.

10. Procédé selon au moins l'une quelconque des revendications 3 à 9, **caractérisé en ce que** le produit obtenu à l'étape iv) est inoculé avec des cristaux d'hydrate de carbone choisis dans le groupe constitué par les cristaux de lactose, de glucose et de maltose.

11. Procédé selon au moins l'une quelconque des revendications 3 à 10, **caractérisé en ce que** le premier et le deuxième refroidissement (étapes iv et vi) sont réalisés à des températures dans la plage allant de 30 à 40 °C et de 20 à 25 °C.

12. Utilisation de précurseurs de caramel selon la revendication 1 ou obtenus par le procédé selon au moins l'une quelconque des revendications 3 à 11 pour la fabrication de confiseries.
